# EUROPÄISCHE PATENTSCHRIFT

(11) **EP 3 574 230 B1**
(45) Veröffentlichungstag und Bekanntmachung des Hinweises auf die Patenterteilung: **26.03.2025**
(21) Anmeldenummer: 17825174.0
(22) Anmeldetag: 14.12.2017
(51) Int. Cl.: F16F 9/04

(54) **LUFTFEDERBALG**
AIR SPRING BELLOWS
SOUFFLET À AIR

(30) Priorität: 30.01.2017 DE 102017201446
(43) Veröffentlichungstag der Anmeldung: 04.12.2019
(73) Patentinhaber: ContiTech Deutschland GmbH, 30175 Hannover (DE)
(72) Erfinder: KRANZ, Harald, 31008 Elze (DE)
(74) Vertreter: Continental Corporation
(86) Internationale Anmeldenummer: PCT/EP2017/082727
(87) Internationale Veröffentlichungsnummer: WO 2018/137843

(56) Entgegenhaltungen:
- DE-U1- 202015 008 448
- FR-A1- 2 448 661
- JP-A- S5 563 027
- US-A- 2 790 650
- US-A1- 2009 278 290

## Beschreibung

Die Erfindung betrifft einen Luftfederbalg, der an seinen beiden Enden über Anschlussteile zwischen einer gefederten und einer ungefederten Masse befestigt ist, wobei der Balg zur Befestigung an dem jeweiligen Anschlussteil mindestens an einem Balgende eine wulstartig umlaufende Verdickung mit einem ringförmigen Kern aufweist.

Solche Luftfederbälge werden eingesetzt als Luftfedereinrichtung für z.B. LKW oder Schienenfahrzeuge zwischen gefederter Karosserie und ungefedertem Fahrwerksteil oder für industrielle Anwendungen, wie etwa für eine luftgefederte Maschinenlagerung. Zwischen den Anschlussteilen tritt der Luftfederbalg üblicherweise mehr oder weniger ballonartig hervor und kann auch so ausgebildet sein, dass er als Rollbalg beim Einfedern an besonderen und an den Anschlussteilen vorgesehenen Konturen oder Kolben abrollt.

Zur Befestigung der Luftfeder an den Anschlussteilen gibt es unterschiedliche Möglichkeiten. Bei industrieller Anwendung, also etwa bei der Federung von Maschinen, weisen die zugehörigen Luftfederbälge üblicherweise an ihren Enden eine wulstartig umlaufende Verdickung mit einem eingebetteten Kern auf, d.h. einen mit einem metallischen Kernring verstärkten Rand. Dieser verstärkte Rand wird mit einem weiteren Ring, nämlich einem metallischen Wulstring an dem jeweiligen Anschlussteil, d.h. am Luftfederdeckel bzw. an der Luftfederfelge festgeklemmt. Der Wulstring besitzt eine im Querschnitt den verstärkten Rand des Luftfederbalgs von außen umgreifende Formung oder Nase und wird dadurch am Anschlussteil oder Deckel befestigt, dass über den äußeren Umfang des Wulstrings Schrauben angreifen oder auch Gewindebolzen/Stehbolzen befestigt sind, die durch eine Bohrung des Anschlussteils gesteckt werden und außenseitig verschraubt und gegebenenfalls gekontert werden. Damit wird auch der Rand des Luftfederbalgs so festgeklemmt, dass eine luftdichte Verbindung zwischen Luftfederbalg und Anschlussteil hergestellt ist.

Auch Luftfedern für Schienenfahrzeuge werden mit jeweils einem Metallkern an beiden Enden, d.h. an den beiden Klemmsitzen ausgeführt, wobei der Balg sicher befestigt und luftdicht abgedichtet werden muss. Die Fixierung eines Balgendes erfolgt z.B. bei einem solchen Halbbalg in der Regel ebenfalls über einen separaten, verschraubten Wulstring, mit dem der Balgflansch mit integriertem Kern form- und kraftschlüssig gegen eine Platte bzw. Fläche gepresst wird. Die korrekte Balgfixierung ist extrem abhängig von den Fertigungstoleranzen und kann im Laufe der Zeit durch das Setzungsverhalten des Elastomers ihre Vorspannung verlieren. Dadurch kann es zu Beulungseffekten an der verschraubten Oberplatte und/oder undefinierter Vorspannung der Verbindung kommen. Insbesondere bei großen Temperaturschwankungen im Betrieb kann es zu Systemundichtigkeiten kommen. Die Wände von Luftfederbälgen sind üblicherweise mit Verstärkungselementen versehen, nämlich Festigkeitsträgern wie Corden, Fadenlagen oder Geweben. Dabei ist es bei der herkömmlichen Fixierung der Balgenden über Wulstringe möglich, dass das das Schlingenende, d.h. das um den Kern geschlungene Ende der Corde oder des Verstärkungsgewebes ungenügend fixiert wird, so dass die Gefahr von Schlingenaufrissen besteht. Außerdem stellt der Wulstring ein zusätzliches Befestigungselement dar, welches die Teileanzahl bei der Montage erhöht.

Die Dokumente US56373656A, JPS5563027A und DE202015008448U1 offenbaren jeweils bekannten Luftfedern mit jeweiligen Luftfederbälgen.

Für die Erfindung bestand daher die Aufgabe, einen Luftfederbalg bereitzustellen, dessen Verbindung mit den Anschlussteilen möglichst einfach gestaltet ist, die größtmögliche Dichtigkeit unter allen Betriebsbedingungen, auch unter großen Temperaturschwankungen aufweist und die ohne separate zusätzliche Bauteile sicher erstellt werden kann.

Gelöst wird diese Aufgabe durch die Merkmale des Hauptanspruchs. Weitere vorteilhafte Ausbildungen sind in den Unteransprüchen offenbart.

Dabei ist der ringförmige Kern im Wesentlichen im Balgmaterial des Luftfederbalgs eingebettet und weist mit dem jeweiligen Anschlussteil zusammenwirkende Einrichtungen auf, mit denen der ringförmige Kern mitsamt dem Balgende an dem Anschlussteil befestigbar ist.

Dadurch entsteht eine sichere Befestigung durch eine direkt mit dem Kern der wulstartig umlaufenden Verdickung am Balgende erfolgende Verspannung bzw. Vorspannung mithilfe von üblicherweise lösbaren Befestigungsmitteln. Zusätzliche Bauteile, wie etwa der bisher übliche Wulstring, sind für die Anbindung der Anschlusselemente an den Luftfederbalg nicht mehr erforderlich.

Auch die minimale Höhe, die eine Luftfeder abhängig von der Einfederung bzw. von der Ruhelage oder Einbaulage einnehmen kann, wird nicht mehr von Schrauben und Wulstring beeinflusst. Durch die erfindungsgemäße Verbindung über den Kernring kann eine möglichst geringe Minimalhöhe erreicht werden. Dies ist gerade bei Anwendungen mit limitierten Bauräumen vorteilhaft.

Eine vorteilhafte, nicht erfindungsgemäße Weiterbildung besteht darin, dass der ringförmige Kern über seinen Umfang verteilt angeordnete und zur Balgachse im Wesentlichen parallel angeordnete Gewindebohrungen aufweist, in die durch Bohrungen der Anschlussteile hindurchragende Schrauben eingreifen, wobei vorzugsweise die Gewindebohrungen anschlussseitig nicht von Balgmaterial überdeckt sind. Gewindebohrungen, beispielsweise Sacklochbohrungen sind eine sehr preiswerte und mit üblichen Verbindungselementen des Maschinenbaus herzustellende Verbindung, wobei solche normierten Verbindungselemente in jeder Größe und Festigkeit vorhanden sind.

Gleiches gilt für eine weitere vorteilhafte, nicht erfindungsgemäße Ausbildung, die darin besteht, dass der ringförmige Kern über seinen Umfang verteilt und zur Balgachse im Wesentlichen parallel angeordnete und in Richtung der Anschlussteile ausgerichtete aus dem Material des Balgs herausragende Gewindebolzen aufweist, die durch Bohrungen der Anschlussteile hindurch reichend ausgebildet sind.

Erfindungsgemäß weist der ringförmige Kern über seinen Umfang verteilt angeordnete und zur Balgachse im Wesentlichen parallel angeordnete und in Richtung der Anschlussteile ausgerichtete aus dem Material des Balgs herausragende Zapfen oder Bolzen auf, die in Bohrungen oder komplementäre Aufnahmen der Anschlussteile einrastbar sind. Dadurch erhält man eine besonders schnell zu montierende Verbindung, die in entsprechender Ausbildung der komplementären Aufnahmen entweder als Einmalverbindung ausgebildet ist oder aber lösbar sein kann.

Eine weitere vorteilhafte Ausbildung bei einem Luftfederbalg mit im Balgmaterial eingebetteten Festigkeitsträgern besteht darin, dass die Festigkeitsträger im Bereich der wulstartig umlaufenden Verdickung so verlaufen, vorzugsweise den Kern bzw. Ring so umschlingen, dass der Bereich der Bohrungen, Gewindebolzen oder Zapfen ausgespart ist. Die Festigkeitsträger, also zum Beispiel die Gewebelagen bzw. Fäden des gewickelten Luftfederbalges, werden während des Herstellungsprozesses durch ein geeignetes Werkzeug um die Bohrungen oder Gewindebolzen herumgeführt, so dass die Fäden nicht unterbrochen bzw. zerstört werden und die Festigkeit der Balgwand vollständig erhalten bleibt.

Eine wieder andere vorteilhafte Ausbildung besteht darin, dass der ringförmige Kern als im Querschnitt flache Scheibe ausgebildet ist, insbesondere aus Metall besteht. Metallteile lassen sich besonders gut in dem elastomeren Material der Balgwand einvulkanisieren und können in den unterschiedlichsten Formen einfach durch Rollen oder andere formgebende Verfahren hergestellt werden.

Eine weitere vorteilhafte Ausbildung besteht darin, dass im Bereich der wulstartigen Verdickung anschlussseitig zusätzliche Dichtelemente vorgesehen oder in der Verdickung Formen zur Dichtung ausgebildet sind, vorzugsweise Dichtringe oder Dichtlippen bzw. Dichtwülste angeordnet sind. Solche zusätzlichen Dichtelemente, wie zum Beispiel O-Ringe, lassen sich sehr leicht im Wulstbereich anordnen. Ebenfalls können die verdickten Enden der Luftfederbälge mit entsprechenden Formgebungen, z. B. mit erhaben ausgebildeten ringförmigen Vorsprüngen oder Dichtlippen ausgebildet werden, die eine zusätzliche Dichtung erlauben.

Anhand eines Ausführungsbeispiels soll die Erfindung näher erläutert werden. Es zeigen
- Fig. 1: einen nicht erfindungsgemäßen Luftfederbalg,
- Fig. 2: eine weitere Ausführung eines nicht erfindungsgemäßen Luftfederbalgs,
- Fig. 3: einen Luftfederbalg aus dem Stand der Technik mit einer herkömmlichen Vebindung zu einem Anschlussteil.

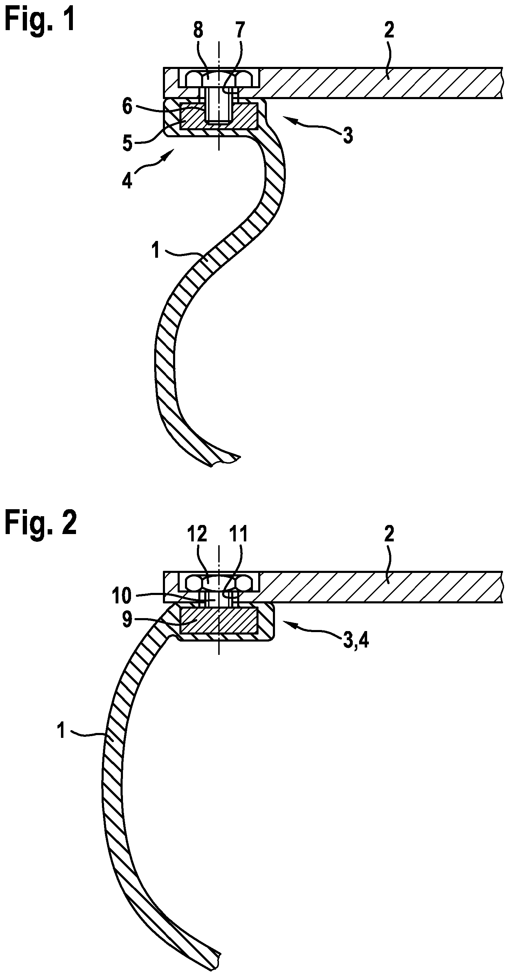

Fig. 1 und 2 zeigen im Schnitt und lediglich prinzipiell erfindungsgemäße Luftfederbälge 1 in einem hier nicht näher dargestellten Fahrwerk eines Schienenfahrzeugs, der an seinen beiden Enden über Anschlussteile zwischen einer gefederten und einer ungefederten Masse befestigt ist, nämlich zwischen der nämlich an seiner oberen Seite mit der Karosserie eines Waggons und mit seiner Unterseite am Fahrschemel des Fahrwerks. Fig.1 und 2 zeigen hier jeweils die obere Befestigung an einem zur Karosserie als ungefederte Masse gehörigen Anschlussteil 2.

Der Luftfederbalg oder Balg 1 weist zur Befestigung am Anschlussteil 2 an seinem zugehörigen Balgende 3 eine wulstartig umlaufende Verdickung 4 mit einem ringförmigen Kern 5 aufweist. Der ringförmige Kern 5 ist im Wesentlichen im Balgmaterial eingebettet ist und weist erfindungsgemäß mit den Anschlussteilen zusammenwirkende Einrichtungen auf, mit denen der ringförmige Kern mitsamt dem Balgende an den Anschlussteilen befestigbar ist.

Bei der in der Fig.1 gezeigten Ausführungsform weist der ringförmige Kern über seinen Umfang verteilt angeordnete und zur Balgachse im Wesentlichen parallel angeordnete Gewindebohrungen 6 aufweist, in die durch Bohrungen 7 des Anschlussteils 2 hindurchragende Schrauben 8 eingreifen, wobei die Gewindebohrungen anschlussseitig nicht von Balgmaterial überdeckt sind.

Bei der in der Fig.2 gezeigten Ausführungsform weist der in der wulstartig umlaufende Verdickung 4 eingebettete ringförmige Kern 9 über seinen Umfang verteilt angeordnete und zur Balgachse im Wesentlichen parallel angeordnete und in Richtung der Anschlussteile ausgerichtete aus dem Material des Balgs herausragende Gewindebolzen 10 auf, die durch Bohrungen 11 des Anschlussteils 2 hindurch reichend ausgebildet sind. Die Gewindebolzen 10 sind hier auf der anderen Seite des Anschlussteils 2 mit Muttern 12 verschraubt.

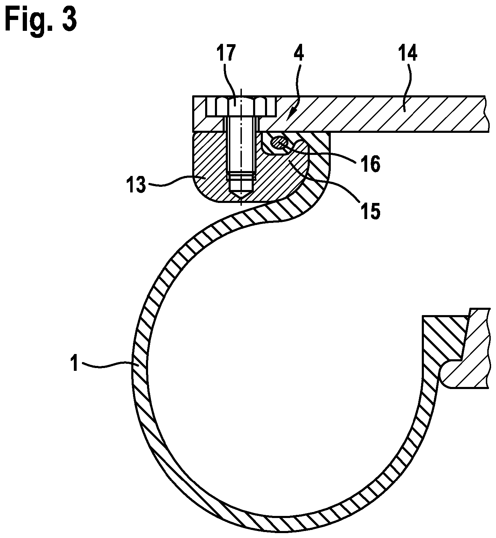

Fig. 3 zeigt zum Vergleich eine Verbindungstechnik herkömmlicher Art, bei der ein Luftfederbalg 1 mit wulstartig umlaufende Verdickung 4 einen einfachen metallischen Kernring 16 aufweist, wie er im Stand der Technik bisher üblich ist. Der so verstärkte Rand des Luftfederbalgs wird mit einem metallischen Wulstring 13 an dem Anschlussteil 14, hier am Luftfederdeckel, festgeklemmt. Der Wulstring 13 besitzt eine im Querschnitt den Rand des Luftfederbalgs von außen umgreifende Formung oder Nase 15 und wird dadurch am Anschlussteil oder Deckel befestigt, dass über den äußeren Umfang des Wulstrings durch das Anschlussteil 2 gesteckte Schrauben 17 in entsprechende Gewindebohrungen des Wulstrings eingreifen.

### Bezugszeichenliste

### (Teil der Beschreibung)

- 1: Luffederbalg
- 2: Anschlussteil
- 3: Balgende
- 4: Verdickung
- 5: Ringförmiger Kern
- 6: Gewindebohrung
- 7: Bohrung
- 8: Schraube
- 9: Ringförmiger Kern
- 10: Gewindebolzen
- 11: Bohrung
- 12: Mutter
- 13: Wulstring
- 14: Anschlussteil
- 15: Nase
- 16: Metallischer Kernring
- 17: Schraube

## Patentansprüche

1. Luftfederbalg (1), der an seinen beiden Enden über Anschlussteile (2) zwischen einer gefederten und einer ungefederten Masse befestigt ist, wobei der Balg (1) zur Befestigung an den Anschlussteilen mindestens an einem Balgende (3) eine wulstartig umlaufende Verdickung (4) mit einem ringförmigen Kern (5, 9) aufweist, wobei der ringförmige Kern (5, 9) im Wesentlichen im Balgmaterial eingebettet ist und mit den jeweiligen Anschlussteilen (2) zusammenwirkende Einrichtungen aufweist, mit denen der ringförmige Kern (5, 9) mitsamt dem Balgende an dem Anschlussteil (2) befestigbar ist, **dadurch gekennzeichnet, dass** der ringförmige Kern über seinen Umfang verteilt angeordnete und zur Balgachse im Wesentlichen parallel angeordnete und in Richtung der Anschlussteile ausgerichtete aus dem Material des Balgs herausragende Zapfen oder Bolzen aufweist, die in Bohrungen oder komplementäre Aufnahmen der Anschlussteile einrastbar sind.

2. Luftfederbalg (1) nach Anspruch 1, mit im Balgmaterial eingebetteten Festigkeitsträgern, bei dem die Festigkeitsträger im Bereich der wulstartig umlaufenden Verdickung so verlaufen, vorzugsweise die Festigkeitsträger den Kern bzw. Ring so umschlingen, dass der Bereich der Zapfen ausgespart ist.

3. Luftfederbalg (1) einem der Ansprüche 1 bis 2, bei dem der ringförmige Kern (5, 9) als im Querschnitt flache Scheibe ausgebildet ist.

4. Luftfederbalg (1) einem der Ansprüche 1 bis 3, bei dem der ringförmige Kern (5, 9) aus Metall besteht.

5. Luftfederbalg einem der Ansprüche 1 bis 4, bei dem im Bereich der wulstartigen Verdickung anschlussseitig zusätzliche Dichtelemente vorgesehen oder in der Verdickung Formen zur Dichtung ausgebildet sind, vorzugsweise Dichtringe oder Dichtlippen bzw. Dichtwülste angeordnet sind.

## Claims

1. Air spring bellows (1) fastened at its two ends between a sprung mass and an unsprung mass via attachment parts (2), wherein, for fastening to the attachment parts, the bellows (1) has, at least at one bellows end (3), an encircling bead-like thickened portion (4) with an annular core (5, 9), wherein the annular core (5, 9) is substantially embedded in the bellows material and has devices which interact with the respective attachment parts (2) and by way of which the annular core (5, 9), together with the bellows end, is fastenable to the attachment part (2), **characterized in that** that the annular core has pegs or pins arranged distributed over its circumference, arranged substantially parallel to the bellows axis, oriented in the direction of the attachment parts and protruding from the material of the bellows that are latchable into bores or complementary receptacles of the attachment parts.

2. Air spring bellows (1) according to Claim 1, having reinforcement members embedded in the bellows material, in which the reinforcement members run in the region of the encircling bead-like thickened portion, preferably the reinforcement members wrap around the core or ring, in such a way that the region of the pegs is recessed.

3. Air spring bellows (1) according to either of Claims 1 and 2, in which the annular core (5, 9) is in the form of a cross-sectionally flat disc.

4. Air spring bellows (1) according to one of Claims 1 to 3, in which the annular core (5, 9) consists of metal.

5. Air spring bellows according to one of Claims 1 to 4, in which, in the region of the bead-like thickened portion, additional sealing elements are provided at the attachment side or, in the thickened portion, there are formed forms for sealing, preferably there are arranged sealing rings or sealing lips or sealing beads.

## Revendications

1. Soufflet de suspension pneumatique (1), qui est fixé à ses deux extrémités par l'intermédiaire de pièces de raccordement (2) entre une masse suspendue et une masse non suspendue, le soufflet (1) présentant, pour la fixation aux pièces de raccordement, au moins à une extrémité de soufflet (3), un épaississement (4) périphérique en forme de bourrelet avec un noyau annulaire (5, 9), le noyau annulaire (5, 9) étant essentiellement noyé dans le matériau du soufflet et présentant des dispositifs coopérant avec les pièces de raccordement respectives (2), avec lesquels le noyau annulaire (5, 9) peut être fixé avec l'extrémité de soufflet à la pièce de raccordement (2), **caractérisé en ce que** le noyau annulaire présente des tenons ou des boulons agencés en étant répartis sur sa circonférence et agencés essentiellement parallèlement à l'axe du soufflet et orientés en direction des pièces de raccordement, qui dépassent du matériau du soufflet, qui peuvent être enclenchés dans des alésages ou des logements complémentaires des pièces de raccordement.

2. Soufflet de suspension pneumatique (1) selon la revendication 1, avec des supports de résistance noyés dans le matériau du soufflet, dans lequel les supports de résistance s'étendent dans la zone de l'épaississement périphérique en forme de bourrelet de telle sorte que, de préférence, les supports de résistance entourent le noyau ou la bague de telle sorte que la zone des tenons est évitée.

3. Soufflet de suspension pneumatique (1) selon l'une quelconque des revendications 1 à 2, dans lequel le noyau annulaire (5, 9) est réalisé sous la forme d'un disque de section transversale plate.

4. Soufflet de suspension pneumatique (1) selon l'une quelconque des revendications 1 à 3, dans lequel le noyau annulaire (5, 9) est constitué de métal.

5. Soufflet de suspension pneumatique selon l'une quelconque des revendications 1 à 4, dans lequel des éléments d'étanchéité supplémentaires sont prévus côté raccordement dans la zone de l'épaississement en forme de bourrelet ou des formes sont réalisées dans l'épaississement pour l'étanchéité, de préférence des bagues d'étanchéité ou des lèvres d'étanchéité ou des bourrelets d'étanchéité sont agencés.
